# EUROPÄISCHE PATENTANMELDUNG

(11) **EP 3 175 695 A1**
(43) Veröffentlichungstag der Anmeldung: **07.06.2017**
(21) Anmeldenummer: 16195739.4
(22) Anmeldetag: 26.10.2016
(51) Int. Cl.: A01C 5/06, B60C 17/06

(54) **SAATGUTANDRUCKROLLE**

(30) Priorität: 03.12.2015 DE 102015121083; 05.02.2016 DE 102016102050
(71) Anmelder: Horsch Maschinen GmbH, 92421 Schwandorf (DE)
(72) Erfinder: HORSCH, Philipp, 92421 Schwandorf (DE)
(74) Vertreter: Benninger, Johannes

(57) **Zusammenfassung**

Es ist eine Saatgutandruckrolle (10) zur Verwendung in einer landwirtschaftlichen Sämaschine und/oder Einzelkornmaschine offenbart, mit Säfurchen ziehenden Säscharen und neben und/oder hinten den Säscharen angeordneten und drehbar gelagerten Saatgutandruckrollen (10), wobei die Saatgutandruckrollen (10) aus einer Felge (18) und einem auf dieser, aus einem elastischen Material bestehenden, reifenartigen Element (12) bestehen, wobei das reifenartige Element (12) zumindest einen umlaufenden Hohlraum (14) mit zumindest zwei beabstandet zueinander angeordneten Seitenwänden (24) und zumindest einem die Lauffläche (22) bildenden Quersteg besteht, wobei sich die Seitenwände (24) bei einem Druck auf die Lauffläche (22) des reifenartigen Elementes (12) nach außen wölben, um eine verbesserte Saatgutandruckrolle (10) zu schaffen ist dem Hohlraum (14) des reifenartigen Elementes (12) ein zusätzliches Kernelement (20) zugeordnet, welches die Vorspannkraft der Lauffläche (22) des reifenartigen Elementes (12) definiert.

## Beschreibung

Die vorliegende Erfindung betrifft eine Saatgutandruckrolle mit den Merkmalen des unabhängigen Patentanspruchs 1.

Derartige Saatgutandruckrollen finden insbesondere in landwirtschaftlichen Sämaschinen Verwendung. Eine derartige Sämaschine mit Saatgutandruckrolle wurde u. a. durch die EP 1 461 399 B1 bereits bekannt. Um einen sicheren Eigenantrieb, eine möglichst große Walkarbeit mit Selbstreinigung und eine gute Einbettung des Saatguts in die Säfurche zu erreichen, ist vorgesehen, dass das Breiten - Höhenverhältnis von Lauffläche zu Seitenflanke mindestens 1:2, vorzugsweise 1: >3 beträgt, wobei die Wandstärken der Saatgutandruckrolle jeweils gleich sind.

Eine weitere Sämaschine in Form einer Einzelkornsämaschine mit Saatgutandruckrolle wurde durch die WO 2011 119 095 A1 bekannt. Bei dieser Saatgutandruckrolle weisen die Seitenwände sowie die Lauffläche unterschiedliche Wandstärken auf. Hierdurch sollen die Anpresskraft der Saatgutandruckrolle im Bereich der Lauffläche entsprechend erhöht werden sowie die Walkeigenschaften durch die dünnen Seitenwände noch ausreichend sein, ohne hierzu zusätzliche Hilfsmittel zu benötigen.

Bei den aus dem Stand der Technik bekannten Saatgutandruckrollen hängen sowohl die Walkeigenschaften als auch die Anpresskräfte jeweils von den Materialeigenschaften sowie den Wandstärken der Rolle ab. Dies setzt teilweise aufwendige Fertigungsverfahren sowie teuere Materialien voraus. Auch können die Eigenschaften nicht geändert werden und somit können die Eigenschaften der Saatgutandruckrolle nicht an die jeweiligen Bodenbedingungen angepasst werden.

Eine weitere Saatgutandruckrolle geht aus der EP 0 404 241 B1 hervor. Hierbei ist die Saatgutandruckrolle aus einem undefomierbar gebildeten Material gefertigt. Die auf der Lauffläche, dieser aus Stahl bestehenden Saatgutandruckrolle, anhaftenden Bodenteile müssen mittels eines Abstreifers beseitigt werden. Ebenso müssen derartige Saatgutandruckrollen federnd gelagert werden, um evtl. Beschädigungen durch Steine oder dergl. zu verhindern. Jedoch sind das Anbringen von Abstreifern sowie die federnde Lagerung aufwendig und kostenintensiv.

Der Erfindung liegt somit die Aufgabe zugrunde, eine Saatgutandruckrolle ohne die Nachteile des Standes der Technik zu schaffen.

Diese Aufgabe wird erfindungsgemäß durch die Merkmale des Patentanspruchs 1 gelöst. Merkmale vorteilhafter Weiterbildungen der Erfindung ergeben sich aus den jeweils abhängigen Ansprüchen.

Zur Lösung der Aufgabe schlägt die Erfindung eine Saatgutandruckrolle vor, welche in landwirtschaftlichen Maschinen wie Sämaschinen und/oder Einzelkornsämaschinen Verwendung findet. Bei derartigen Maschinen sind in der Regel eine Vielzahl von Säscharen angeordnet, mittels welchen das jeweils auszubringende Saat- bzw. Verteilgut in den Boden abgelegt wird. Die Säschare besitzen zunächst Säfurchen ziehende Werkzeuge wie Sechscheiben, Zinken oder dergl. In die Säfurchen wird anschließend über Saatrohre das jeweils auszubringende Saatgut befördert, wobei dieses Saatgut bspw. mittels Dosiervorrichtungen vereinzelt und mit großer Geschwindigkeit befördert werden kann. Dem Ausgang des Saatrohrs nachgeordnet ist eine erfindungsgemäße Saatgutandruckrolle. Mittels dieser soll zum einen ein Verrollen bzw. Verspringen des Saatguts in der Säfurche verhindert werden und zum anderen das Saatgut im Boden leicht angedrückt bzw. in den Boden eingebettet werden, bevor dieses anschließend mittels diversen weiteren Werkzeugen in den Boden gedrückt und die Säfurche verschlossen wird.

Die Saatgutandruckrolle ist über ein Lagerelement drehbar am Säschar montiert und besteht im Wesentlichen aus einer Felge und einem auf dieser angebrachten und aus einem elastischen Material bestehenden reifenartigem Element bzw. Mantel. Das reifenartige Element, welches bspw. aus einem Gummi und/oder Kunststoffmaterial gefertigt ist, weist einen Hohlraum auf. Dieser Hohlraum wird aus zwei Seitenwänden und einem Quersteg, welcher zugleich die Lauffläche der Saatgutandruckrolle in der Säfurche ist, gebildet. Der Quersteg kann hierbei flach bzw. planar, aber auch abgerundet oder dergl. sein. Die Seitenwände und die Lauffläche können identische Materialstärken aufweisen. Es wären jedoch auch unterschiedliche Wandstärken vorstellbar, so dass bspw. die Lauffläche eine größere Materialstärke als die Seitenwände aufweist oder umgekehrt. Auch könnten die Seitenwände zumindest abschnittweise eine größere Wandstärke aufweisen. Die Seitenwände und die Lauffläche weisen vorzugsweise ein Breiten - Höhenverhältnis von 1:2, insbesondere jedoch 1: > 3 auf, d.h. die Breite der Lauffläche entspricht lediglich der Hälfte bzw. einem Drittel der Höhe des reifenartigen Elements.

Die Seitenwände können gerade oder konisch geformt sein. So können diese bspw. zunächst im Bereich der Felge in etwa die Breite der Felge aufweisen, und können sich dann von der Felge weg konisch bis zu einem Scheitelpunkt aufweiten und sich anschließend wieder konisch verjüngen, bis sie die breite der Lauffläche aufweisen, bzw. können diese in eine bogenförmige Kontur übergehen. Die Form ist jedoch insbesondere derartig gebildet, dass die Seitenwände sich, sobald eine Kraft auf die Lauffläche einwirkt nach außen wölben und bei Drehung der Saatgutandruckrolle zu Walken beginnen. Hierdurch kann sich anhaftende Erde von selbst lösen, wodurch keine Abstreifer oder dergl. benötigt werden sowie die Saatgutandruckrolle nicht mehr federnd gelagert werden muss.

Um zum einen möglichst gute Walkeigenschaften der Saatgutandruckrolle und zum anderen eine ausreichende Vorspannkraft der Lauffläche zu erreichen, ist dem Hohlraum des reifenartigen Elements bzw. Mantels ein zusätzliches Kernelement zugeordnet, wobei dieses vorzugsweise eine sich von der Elastizität des reifenartigen Elements unterscheidende Elastizität aufweist. Vorzugsweise ist die Elastizität des Kernelements geringer als die des reifenartigen Elements. Die unterschiedlichen Elastizitäten können bspw. durch unterschiedliche Materialien erzeugt werden. Ebenso können die Elastizitäten durch verschiedene Konturen und/oder Querschnitte und/oder geometrische Gestaltungen erzeugt werden. Das Kernelement kann hierbei unterschiedlichste Formen aufweisen. So wäre ein ringartiges Kernelement vorstellbar, welches einen runden Querschnitt aufweist und welches vorzugsweise an der Innenfläche der Lauffläche anliegt.

Das Kernelement sowie das reifenartige Element können bspw. aus einem metallischen Werkstoff wie bspw. Stahl oder Aluminium sein. Auch könnten diese aus Kunststoff sein. Ebenso vorstellbar wäre es, dass diese aus einem Elastomer gebildet sind, wobei die verwendeten Materialien jeweils derartig gewählt sein können, dass das Kernelement eine geringere Elastizität bzw. größere Härte als das reifenartige Element bzw. der Mantel aufweist. Auch zwei gleiche Materialien mit unterschiedlichen Härtegraden könnten Verwendung finden. Ebenso denkbar wäre es, dass die verschiedenen Elastizitäten durch verschiedene geometrische Gestaltungen des Kernelements und des reifenartigen Elements erzeugt werden.

Das Kernelement ist insbesondere derartig gestaltet, dass dieses eine ausreichende Formstabilität der Saatgutandruckrolle, insbesondere des reifenartigen Elements, gewährleistet. So ist dieses derartig konzipiert, dass ein seitliches Ausknicken der Saatgutandruckrolle auch bei hohen auf die Lauffläche wirkenden Kräfte verhindert wird, die Seitenwände jedoch, um eine ausreichende Walkarbeit zu gewährleisten, aus einem möglichst weichen bzw. elastischen Material gefertigt sein können.

Das Kernelement könnte bspw. auch ein Einlegeteil und/oder der Spritzkern des reifenartigen Elements sein. Auch können sich die verwendeten Materialen des Kernelements und des reifenartigen Elements bei dessen Herstellung vernetzen. Weiter könnten das Kernelement und das reifenartige Element verklebt werden. Auch könnte das Kernelement als Feder und/oder als Druckfeder ausgebildet sein. Insbesondere vorstellbar wäre auch die Verwendung einer aus dem Stand der Technik bekannten Ringfeder.

In einer bevorzugten Ausführungsform weist das ringförmige Element in dessen Verlauf eine Öffnung auf, über die das Kernelement in dieses eingelegt werden kann. Vorzugsweise befindet sich diese Öffnung in der Montagewulst. Durch eine derartige Ausgestaltung ist es jederzeit möglich, durch die Verwendung von verschiedenen Kernelementen die Eigenschaften der Saatgutandruckrolle an die jeweiligen Bedingungen bzw. Anforderungen anzupassen.

Es kann vorgesehen sein, dass das Kernelement an der inneren Kontur der Lauffläche des reifenartigen Elements anliegt.

Eine Weiterbildung der Erfindung kann vorsehen, dass das reifenartige Element ein Breiten-Höhenverhältnis von Lauffläche zu Seitenwand aufweist, welches mindestens 1 : 2, vorzugsweise 1 : > 3 beträgt.

Die vorliegende Erfindung erstreckt sich darüber hinaus auf eine landwirtschaftliche Sämaschine und/oder auf eine Einzelkornmaschine mit mindestens einem Säfurchen ziehenden Säschar und jeweils neben und/oder hinten dem wenigstens einen Säschar angeordneten und drehbar gelagerten Saatgutandruckrollen. Wie oben bereits definiert, setzt sich die mindestens eine Saatgutandruckrolle zumindest aus einer Felge und einem auf dieser, aus einem elastischen Material bestehenden, reifenartigen Element zusammen, wobei das reifenartige Element aus zumindest einem umlaufenden Hohlraum mit zumindest zwei beabstandet zueinander angeordneten Seitenwänden und zumindest einem die Lauffläche bildenden Quersteg besteht. Dabei ist vorgesehen, dass sich die Seitenwände bei einem Druck auf die Lauffläche des reifenartigen Elementes wölben, wobei sich die Seitenwände bei einem Druck auf die Lauffläche des reifenartigen Elementes insbesondere nach außen wölben. Im Hohlraum des reifenartigen Elementes befindet sich ein zusätzliches Kernelement, welches die Vorspannkraft der Lauffläche des reifenartigen Elementes definiert. Die weitere Ausgestaltung der landwirtschaftlichen Sämaschine und/oder Einzelkornsämaschine mit der Saatgutandruckrolle bzw. den mehreren Saatgutandruckrollen kann entsprechend einer der bereits weiter oben beschriebenen Ausführungsvarianten sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt in einer schematischen Perspektivansicht eine Ausführungsvariante einer Saatgutandruckrolle.
Fig. 1B zeigt eine schematische Perspektivansicht einer Ausführungsvariante der Saatgutandruckrolle mit außen anliegendem Kernelement im Schnitt.
Fig. 2 zeigt in zwei Detailansichten (Fig. 2A und Fig. 2B) eine Saatgutandruckrolle mit außen anliegendem Kernelement im Schnitt.
Fig. 3 zeigt in einer Prinzipskizze einen mit dem Boden im Eingriff stehenden Teil der Saatgutandruckrolle mit Kernelement.

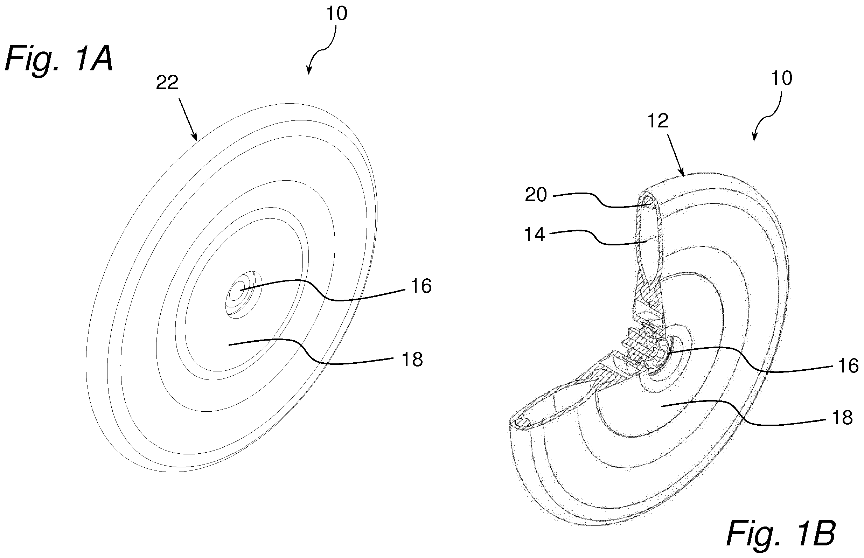

Für gleiche oder gleich wirkende Elemente der Erfindung werden in den Figuren 1 bis 3 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Saatgutandruckrolle ausgestaltet sein kann und stellen keine abschließende Begrenzung dar.

Die Fig. 1A zeigt in einer schematischen Perspektivansicht eine Ausführungsvariante einer erfindungsgemäßen Saatgutandruckrolle 10. Fig. 1B zeigt ebenfalls eine derartige Saatgutandruckrolle 10, wobei hierbei ein reifenartiges Element bzw. ein Mantel 12, welcher einen Hohlraum 14 aufweist, sowie das Kernelement 20 im Schnitt dargestellt wurden. Eine derartige Saatgutandruckrolle 10 findet in der Regel in landwirtschaftlichen Sämaschinen bzw. Säscharen, insbesondere in Verbindung mit Einzelkorndosiersystemen, Verwendung. Mittels dieser Säschare werden in der Regel zunächst Säfurchen gebildet. In diese Säfurchen wird anschließend das jeweils auszubringende Saatgut mittels Saatrohren oder dergl. befördert. Den Saatrohren nachgeordnet und in den Säfurchen laufend sind jeweils erfindungsgemäße Saatgutandruckrollen 10. Mittels dieser soll das Saatgut zum einen abgebremst und ein Verrollen in der Saatfurche unterbunden werden; darüber hinaus soll das Saatgut dieses in den Boden gedrückt bzw. in diesen eingebettet werden. Um ein Anheften von Erde oder dergl. an die Saatgutandruckrolle 10 zu vermeiden, soll diese darüber hinaus gute Walkeigenschaften, also eine große Flexibilität bzw. Elastizität, aufweisen.

Die Saatgutandruckrollen 10 der Figuren 1 weisen hierbei jeweils ein Lager 16 auf, mittels welchem die Saatgutandruckrolle 10 drehbar an einem Säschar montiert werden kann. Das Lager 16 ist von einer Felge 18 umgeben bzw. in diese eingebettet. Auf der Felge ist ein reifenartiges Element 12 montiert, welches jeweils einen Hohlraum 14 bildet. Im Hohlraum 14 des reifenartigen Elements 12 ist in Fig. 1B ein außen anliegendes Kernelement 20 angebracht. Dieses Kernelement 20 ist derartig gestaltet, dass dieses an der inneren Kontur der Lauffläche 22 des reifenartigen Elements 12 anliegt. Das Kernelement 20 weist hierbei einen runden Querschnitt auf und definiert die Vorspannkraft bzw. die Elastizität der durch einen Quersteg gebildeten Lauffläche 22 der Saatgutandruckrolle 10.

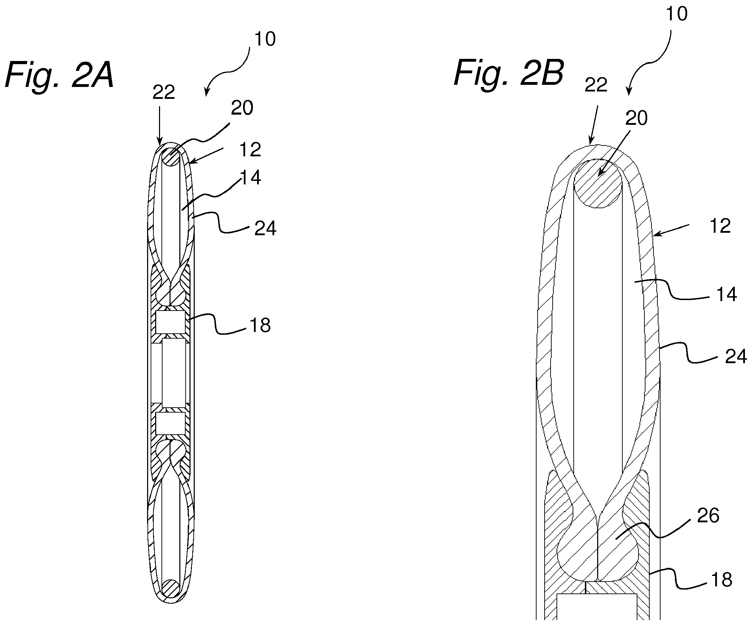

Aus der Fig. 2 gehen zwei Detailansichten im Schnitt einer Saatgutandruckrolle 10 gemäß der Fig. 1B mit außen anliegendem Kernelement 20 hervor. Die Saatgutandruckrolle 10 weist eine Felge 18 auf, auf welcher Felge 18 mittels einer Montagewulst 26 ein reifenartiges Element 12 montiert wird. Die Felge 18 kann hierbei für eine vereinfachte Montage zwei- oder mehrteilig gebildet sein. Das reifenartige Element 12 weist in Richtung weg von der Felge 18 zunächst jeweils links und rechts konisch nach außen verlaufende Seitenwände 24 auf, bei ca. einem Drittel der Höhe weist dieses dessen max. Breite auf und verjüngt sich anschließend wiederum konisch. An die Seitwände 24 schließt ein Quersteg an, welcher Quersteg zugleich die Lauffläche 22 der Saatgutandruckrolle 10 bildet. Im Ausführungsbeispiel der Fig. 2 ist diese Lauffläche 22 bogenförmig ausgebildet, wobei diese auch zumindest abschnittweise eben bzw. planar ausgebildet sein könnte. Durch die konische Ausgestaltung der Seitenwände 24 soll erreicht werden, dass das reifenartige Element 12 bei einer einwirkenden Kraft auf die Lauffläche 22 sich nach außen wölbt, wodurch die Walkeigenschaften und somit der sog. Selbstreinigungseffekt verbessert werden. Ebenso soll dadurch ein Ausbrechen bzw. ein Wegbiegen der Saatgutandruckrolle 10 verhindert werden.

Die Seitenwände 24 und die Lauffläche 22 weisen im Wesentlichen jeweils die gleiche Materialstärke auf, wobei diese auch variieren könnten. Ebenso bilden diese einen Hohlraum 14, wodurch wiederum die Walkeigenschaften verbessert werden. Um eine Vorspannkraft der Lauffläche 22 zu definieren, ist im Hohlraum 14 ein Kernelement 20 eingelegt. Dieses weist einen Aussendurchmesser auf, welcher weitgehend identisch zum Innendurchmesser der Lauffläche 22 ist. Das Kernelement 20 ist kreisförmig ausgebildet. Darüber hinaus ist dieses vorzugsweise aus einem Material mit einer geringeren Elastizität als das reifenartige Element 12 gebildet. Insbesondere könnte es sich beim Kernelement 20 um eine Feder handeln, welche über einen Schlitz in der Montagewulst 26 oder dergl. Öffnung in das reifenartige Element 12 eingelegt und somit getauscht werden kann.

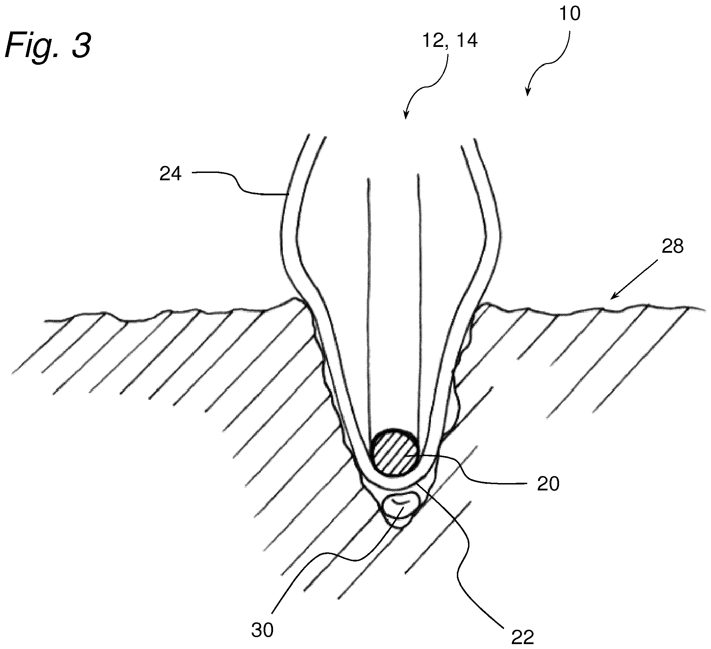

Fig. 3 zeigt in einer Prinzipskizze eine Saatgutandruckrolle 10 mit einem Kernelement 20, welche in einer in einem Boden 28 gezogenen Furche bewegt wird. An der tiefsten Stelle der Furche wurde Saatgut in Form eines Saatkorns 30 abgelegt. Das Kernelement 20 befindet sich im Hohlraum 14 des reifenartigen Elements 12. Das reifenartige Element 12 besitzt jeweils zwei Seitenwände 24, welche in deren Elastizität derartig konzipiert sind, dass sich dieses an die Kontur der Saatfurche anpassen kann. Durch das Kernelement 20 wird jedoch eine ausreichende Formstabilität des reifenartigen Elements 12 gewährleistet, ohne das die Seitenwände 24 durch die auf die Lauffläche 22 wirkenden Kräfte ausknicken.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Saatgutandruckrolle
- 12: reifenartiges Element; Mantel
- 14: Hohlraum
- 16: Lager
- 18: Felge
- 20: Kernelement
- 22: Lauffläche
- 24: Seitenwand
- 26: Montagewulst
- 28: Boden
- 30: Saatkorn

## Patentansprüche

1. Saatgutandruckrolle (10) zur Verwendung in einer landwirtschaftlichen Sämaschine und/oder Einzelkornmaschine mit Säfurchen ziehendem Säschar und neben und/oder hinten dem Säschar angeordneten und drehbar gelagerten Saatgutandruckrollen (10), wobei sich die Saatgutandruckrolle (10) zumindest aus einer Felge (18) und einem auf dieser, aus einem elastischen Material bestehenden, reifenartigen Element (12) zusammensetzt, wobei das reifenartige Element (12) aus zumindest einem umlaufenden Hohlraum (14) mit zumindest zwei beabstandet zueinander angeordneten Seitenwänden (24) und zumindest einem die Lauffläche (22) bildenden Quersteg besteht, wobei sich die Seitenwände (24) bei einem Druck auf die Lauffläche (22) des reifenartigen Elementes (12) insbesondere nach außen wölben, und wobei sich im Hohlraum (14) des reifenartigen Elementes (12) ein zusätzliches Kernelement (20) befindet, welches die Vorspannkraft der Lauffläche (22) des reifenartigen Elementes (12) definiert.

2. Saatgutandruckrolle (10) nach Anspruch 1, bei der das Kernelement (20) eine Gestaltung aufweist, welche die Formstabilität des reifenartigen Elements (12) im Wesentlichen beeinflusst und/oder definiert.

3. Saatgutandruckrolle (10) nach Anspruch 1, bei der das Kernelement (20) und das reifenartige Element voneinander abweichende Elastizitäten aufweisen, wobei das Kernelement (20) insbesondere eine geringere Elastizität als das reifenartige Element (12) aufweist.

4. Saatgutandruckrolle (10) nach einem der Ansprüche 1 bis 3, bei der die Elastizitäten durch unterschiedlichen Materialien und/oder durch unterschiedliche geometrische Gestaltungen erzeugt werden bzw. gebildet sind.

5. Saatgutandruckrolle (10) nach einem der vorhergehenden Ansprüche, bei der das Kernelement (20) und/oder das reifenartige Element (12) aus einem metallischen Werkstoff und/oder aus einem Kunststoff und/oder aus einem Elastomer gebildet sind.

6. Saatgutandruckrolle (10) nach einem der vorhergehenden Ansprüche, bei der das Kernelement (20) einen größeren Härtegrad als das reifenartige Element (12) aufweist.

7. Saatgutandruckrolle (10) nach einem der vorhergehenden Ansprüche, bei der das Kernelement (20) als Feder, vorzugsweise als Ringfeder ausgebildet ist.

8. Saatgutandruckrolle (10) nach einem der vorhergehenden Ansprüche, bei der das Kernelement (20) an der inneren Kontur der Lauffläche (22) des reifenartigen Elements (12) anliegt.

9. Saatgutandruckrolle (10) nach einem der vorhergehenden Ansprüche, bei der das reifenartige Element (12) ein Breiten-Höhenverhältnis der Lauffläche (22) zur Seitenwand (24) aufweist, welches mindestens eins zu zwei, vorzugsweise eins zu drei bzw. eins zu einem Wert größer als drei beträgt.

10. Landwirtschaftliche Sämaschine und/oder Einzelkornmaschine mit mindestens einem Säfurchen ziehenden Säschar und jeweils neben und/oder hinten dem wenigstens einen Säschar angeordneten und drehbar gelagerten Saatgutandruckrollen (10), wobei sich die mindestens eine Saatgutandruckrolle (10) zumindest aus einer Felge (18) und einem auf dieser, aus einem elastischen Material bestehenden, reifenartigen Element (12) zusammensetzt, wobei das reifenartige Element (12) aus zumindest einem umlaufenden Hohlraum (14) mit zumindest zwei beabstandet zueinander angeordneten Seitenwänden (24) und zumindest einem die Lauffläche (22) bildenden Quersteg besteht, wobei sich die Seitenwände (24) bei einem Druck auf die Lauffläche (22) des reifenartigen Elementes (12) insbesondere nach außen wölben, und wobei sich im Hohlraum (14) des reifenartigen Elementes (12) ein zusätzliches Kernelement (20) befindet, welches die Vorspannkraft der Lauffläche (22) des reifenartigen Elementes (12) definiert.

11. Landwirtschaftliche Sämaschine und/oder Einzelkornsämaschine nach Anspruch 10 mit wenigstens einer Saatgutandruckrolle (10) gemäß einem der Ansprüche 1 bis 9.
